# EUROPÄISCHE PATENTSCHRIFT

(11) **EP 2 655 136 B1**
(45) Veröffentlichungstag und Bekanntmachung des Hinweises auf die Patenterteilung: **25.02.2015**
(21) Anmeldenummer: 11807637.1
(22) Anmeldetag: 23.11.2011
(51) Int. Cl.: B60R 25/00

(54) **VERFAHREN ZUR ERZEUGUNG EINER BEDIENMELDUNG BEIM AUFTRETEN EINES BEDIENEREIGNISSES**
METHOD FOR GENERATING AN OPERATING MESSAGE UPON OCCURRENCE OF AN OPERATING EVENT
PROCÉDÉ DE PRODUCTION D'UN MESSAGE DE SERVICE EN CAS DE SURVENANCE D'UN ÉVÉNEMENT DE SERVICE

(30) Priorität: 21.12.2010 DE 102010055297
(43) Veröffentlichungstag der Anmeldung: 30.10.2013
(73) Patentinhaber: Brose Fahrzeugteile GmbH & Co. KG, Hallstadt, 96103 Hallstadt (DE)
(72) Erfinder: RUSS, Detlef, 96237 Ebersdorf (DE); WÜRSTLEIN, Holger, 97475 Zeil am Main (DE); FUCHS, Thorsten, 96103 Hallstadt (DE)
(74) Vertreter: Gottschald, Jan
(86) Internationale Anmeldenummer: PCT/EP2011/005896
(87) Internationale Veröffentlichungsnummer: WO 2012/084111

(56) Entgegenhaltungen:
- EP-A1- 2 098 670
- EP-A2- 0 770 749
- WO-A1-2005/108175
- WO-A1-2007/148178
- DE-A1- 19 900 415
- DE-A1-102009 017 404
- DE-U1-202005 020 140
- US-A1- 2007 087 898
- US-A1- 2008 195 273

## Beschreibung

Die Erfindung betrifft ein Verfahren zur Erzeugung einer Bedienmeldung beim Auftreten eines Bedienereignisses gemäß dem Oberbegriff von Anspruch 1 sowie eine Verschlusselementanordnung eines Kraftfahrzeugs gemäß dem Oberbegriff von Anspruch 15.

Die elektrischen Bordnetze heutiger Kraftfahrzeuge sind mit einer Vielzahl elektrischer Verbraucher ausgestattet, die zu einem erheblichen Teil der Realisierung von Komfortfunktionen dienen.

Eine der obigen Komfortfunktionen ist der automatischen Betätigung motorischer Heckklappen von Kraftfahrzeugen zuzuordnen. Bei der bekannten Komfortfunktion (DE 20 2005 020 140 U1) ist es vorgesehen, dass ein benutzerseitiges Bedienereignis, hier eine benutzerseitige Fußbewegung, das motorische Öffnen der Heckklappe bewirkt. Hierfür ist das Kraftfahrzeug mit einer entsprechenden Sensoranordnung und einer der Sensoranordnung zugeordneten Sensorsteuerung ausgestattet. Die Anordnung ist so getroffen, dass die Sensorsteuerung im Falle eines Bedienereignisses eine Bedienmeldung erzeugt. Hierfür werden die Sensormesswerte mittels der Sensorsteuerung in einer Bedienereignisüberwachung auf das Auftreten eines für das zu erfassende Bedienereignis charakteristischen Verhaltens der Sensormesswerte überwacht.

Das obige, bekannte Verfahren zur sensorischen Erfassung eines Bedienereignisses ermöglicht ein besonders komfortables motorisches Betätigen der Heckklappe eines Kraftfahrzeugs. Für die Zuverlässigkeit der Betätigung ist die Auslegung der Sensorsteuerung maßgeblich. Schwierigkeiten können sich ergeben, wenn eine Störsituation ein Verhalten der Sensormesswerte hervorbringt, das in Teilen dem Verhalten der Sensorsignale des zu erfassenden Bedienereignisses entspricht. Dadurch kann es vorkommen, dass ein Bedienereignis als erfasst gilt, obwohl tatsächlich nur eine Störsituation vorliegt. Dies ist mit einer Reduzierung der Betriebssicherheit des in Rede stehenden Verfahrens verbunden.

Der Erfindung liegt das Problem zugrunde, das bekannte Verfahren derart weiterzubilden, dass die Betriebssicherheit erhöht wird.

Das obige Problem wird bei einem Verfahren gemäß dem Oberbegriff von Anspruch 1 durch die Merkmale des kennzeichnenden Teils von Anspruch 1 gelöst.

Wesentlich ist, dass zusätzlich zu der Bedienereignisüberwachung eine Störsituationsüberwachung eingerichtet wird, in der die Sensormesswerte zumindest eines Sensorelements mittels der Sensorsteuerung im Hinblick auf das Auftreten eines für eine Störsituation charakteristischen Verhaltens der Sensormesswerte überwacht werden. Vorschlagsgemäß wird also nicht nur eine Bedienereignisüberwachung, sondern auch eine Störsituationsüberwachung vorgenommen.

Wesentlich ist weiter, dass mittels der Sensorsteuerung eine Bedienmeldung nur dann erzeugt wird, wenn den beiden Überwachungen, also der Bedienereignisüberwachung und der Störsituationsüberwachung nach ein Bedienereignis und keine Störsituation vorliegen. Damit wird ausgeschlossen, dass die Erfassung eines Bedienereignisses letztlich nur auf eine Störsituation zurückgeht.

In besonders bevorzugter Ausgestaltung findet das vorschlagsgemäße Verfahren Anwendung im Zusammenhang mit einer Verschlusselementanordnung eines Kraftfahrzeugs (Anspruch 2). Die besonders bevorzugte Ausgestaltung gemäß Anspruch 3 sieht hierfür die Überwachung von mindestens zwei Sensorelementen vor, die an einem hinteren Verkleidungsteil eines Kraftfahrzeugs angeordnet sind.

Die weiter bevorzugten Ausgestaltungen gemäß den Ansprüchen 4 bis 7 betreffen eine Bedienereignisüberwachung nach Art einer Mustererkennung, bei der die Sensorsignale auf das Auftreten einer Anzahl charakteristischer Merkmale überwacht werden. Hierfür sind leistungsfähige Mechanismen bekannt, die vorliegend Anwendung finden können.

Gemäß Anspruch 9 wird vorgeschlagen, dass in der Störsituationsüberwachung jedenfalls auch ein dem jeweiligen Überwachungszeitpunkt zeitlich insbesondere unmittelbar vorgelagerter Bereich berücksichtigt wird. Damit ist es möglich zu überprüfen, ob ein vermeintliches Bedienereignis in den Kontext der vorangegangenen Sensormesswerte passt oder nicht. Dies trägt dem Umstand Rechnung, dass einem tatsächlichen Bedienereignis regelmäßig eine Serie von Nullmesswerten vorausgehen. Mit "Nullmesswert" ist der Messwert bezeichnet, der sich ergibt, wenn der Wirkbereich des jeweiligen Sensorelements frei von irgendwelchen sensorisch erfassbaren Elementen ist.

Vorschlagsgemäß wird eine Variable "Störindikator" definiert, die immer dann erhöht wird, wenn im jeweiligen Überwachungszeitpunkt ein Störanzeichen erfasst wird. Sofern kein Störanzeichen erfasst wird, ist es vorzugsweise vorgesehen, dass der Störindikator in vorbestimmter Weise reduziert wird (Anspruch 10). Dies entspricht einer einfachen Integrationsfunktion, mit der u.a. sichergestellt werden kann, dass der Einfluß von "Ausreißern" in den Sensormeßwerten nur gering ist.

Die Ansprüche 11 bis 14 betreffen eine Reihe bevorzugter Definitionen für Störanzeichen, wobei ein Störanzeichen im einfachsten Fall darin besteht, dass in dem jeweiligen Überwachungszeitpunkt ein Sensorelement als alleiniges Sensorelement von einem Nullmesswert verschiedene oder unterhalb einer vorbestimmten Schwelle liegende Sensormesswerte liefert (Anspruch 14). Das ist dann sachgerecht, wenn im Falle eines tatsächlichen Bedienereignisses in der Regel beide Sensorelemente vom Nullmesswert verschiedene oder oberhalb der Schwelle liegende Sensormesswerte liefern.

Nach einer weiteren Lehre gemäß Anspruch 15, der eigenständige Bedeutung zukommt, wird eine Verschlusselementanordnung eines Kraftfahrzeugs mit einem motorisch verstellbaren Verschlusselement beansprucht, wobei durch eine obige Bedienmeldung der zugeordneten Sensorsteuerung eine motorische Verstellung des Verschlusselements auslösbar ist. Die Erzeugung der Bedienmeldung erfolgt nach dem erläuterten, vorschlagsgemäßen Verfahren. Auf alle Erläuterungen, die das vorschlagsgemäße Verfahren betreffen, darf verwiesen werden.

Im Folgenden wird die Erfindung anhand einer lediglich ein Ausführungsbeispiel darstellenden Zeichnung näher erläutert. In der Zeichnung zeigt
- Fig. 1: den Heckbereich eines Kraftfahrzeugs mit einer vorschlagsgemäßen Verschlusselementanordnung zur Durchführung des vorschlagsgemäßen Verfahrens,
- Fig. 2: eine Sequenz eines vorschlagsgemäßen, zu erfassenden Bedienereignisses in den fünf Stufen a) bis e),
- Fig. 3: zwei beispielhafte Signalverläufe zweier Sensorelemente der Verschlusselementanordnung gemäß Fig. 1 während eines Bedienereignisses gemäß Fig. 2 und
- Fig. 4: während einer Störsituation a) und b) die Sensormesswerte zweier Sensorelemente, c) und d) die entsprechenden Sensormesswerte nach einer Schwellwertfilterung, e) die Variable "Störindikator", f) die Variable "Störindikator" nach einer Schwellwertfilterung, g) das Ergebnis der Bedienereignisüberwachung und h) das Ergebnis der Erzeugung von Bedienmeldungen.

Das vorschlagsgemäße Verfahren zur Erzeugung einer Bedienmeldung beim Auftreten eines Bedienereignisses wird im Folgenden anhand eines Bedienereignisses erläutert, das von einem Benutzer eines Kraftfahrzeugs erzeugt wird. Das vorschlagsgemäße Verfahren kann aber für alle denkbaren Bereiche, in denen es um die sensorische Erfassung von Bedienereignissen geht, Anwendung finden.

Die sensorische Erfassung des Bedienereignisses erfolgt vorschlagsgemäß mittels einer Sensoranordnung 1, der mindestens ein hier und vorzugsweise als Näherungssensor ausgestaltetes Sensorelement 2, 3 und eine Sensorsteuerung 4 zugeordnet sind. Bei dem hier dargestellten Ausführungsbeispiel handelt es sich um eine Sensoranordnung 1 mit genau zwei Sensorelementen 2, 3, wie im Folgenden noch erläutert wird.

Die Sensorsteuerung 4 dient in erster Linie der Erzeugung einer Bedienmeldung, sobald ein tatsächliches Bedienereignis vorliegt. Diese Bedienmeldung wird dann genutzt, um nachgeschaltete Prozesse, beispielsweise einen Authentifizierungsdialog oder die Ansteuerung eines Antriebs auszulösen.

Der Erzeugung einer Bedienmeldung liegen die Ergebnisse einer Bedienereignisüberwachung zugrunde, in der mittels der Sensorsteuerung 4 die Sensormesswerte 5, 6 zumindest eines Sensorelements 2, 3 auf das Auftreten eines für das zu erfassende Bedienereignis charakteristischen Verhaltens der Sensormesswerte 5, 6 überwacht werden. Die Sensorsteuerung 4 arbeitet vorzugsweise im Taktbetrieb, so dass insbesondere die obige Überwachung taktweise erfolgt. Die Bedienereignisüberwachung erfolgt hier fortlaufend, also über einen Überwachungszeitraum gesehen ständig oder jedenfalls in bestimmten Taktintervallen.

Hier und vorzugsweise handelt es sich bei dem zu erfassenden Bedienereignis um eine Fußbewegung des Benutzers des Kraftfahrzeugs, wie noch erläutert wird.

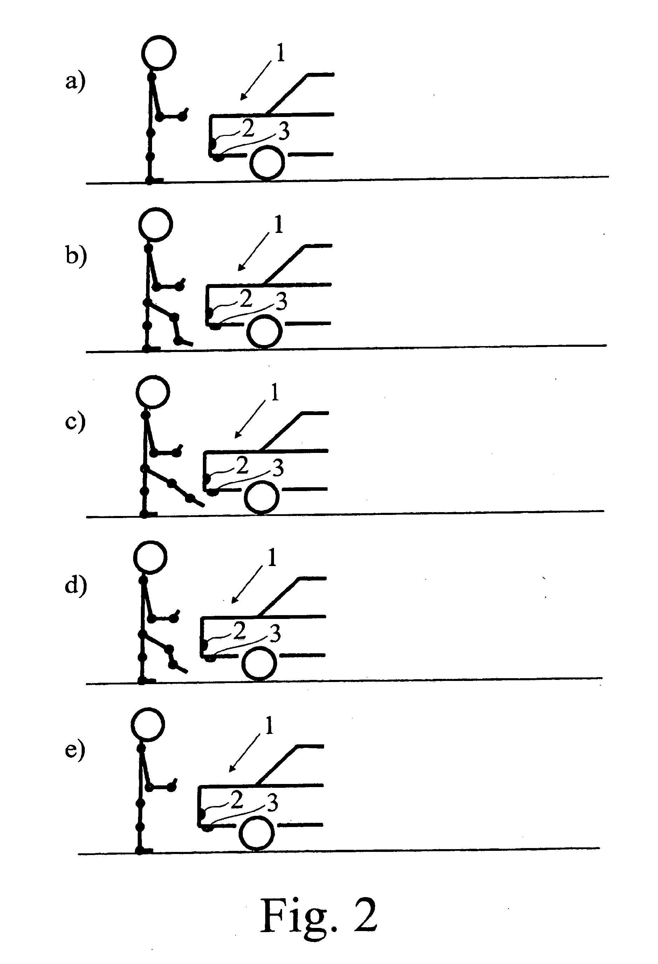

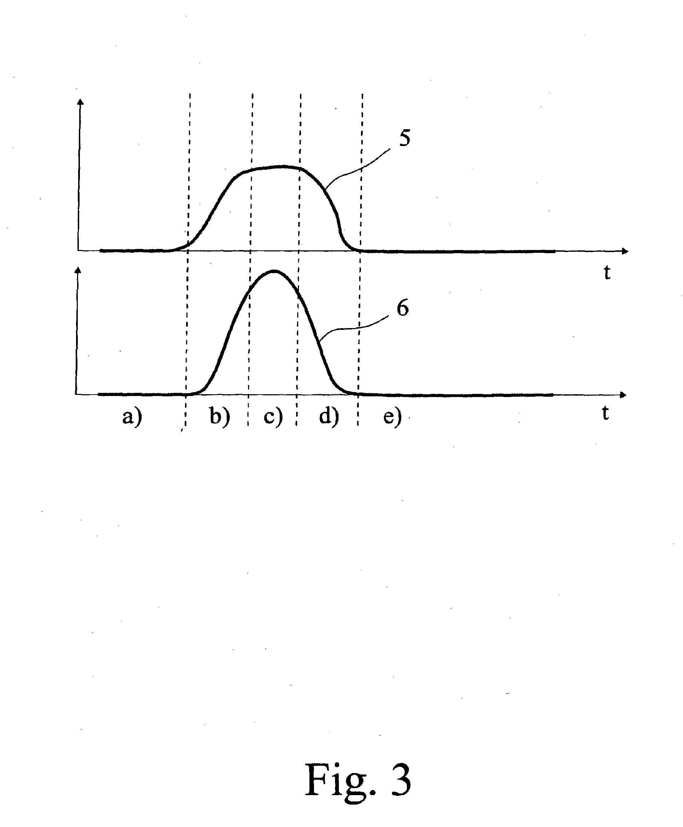

Fig. 2 zeigt in den Abbildungen a) bis e) die Stationen der Sequenz eines Bedienereignisses, das eine Hin- und Rückbewegung des Fußes des Benutzers umfasst. Fig. 3 zeigt die resultierenden Sensormesswerte 5, 6 der beiden Sensorelemente 2, 3, wobei in der dortigen Darstellung die in Fig. 2 dargestellten Stationen a) bis e) im Zeitbereich entsprechend gekennzeichnet sind.

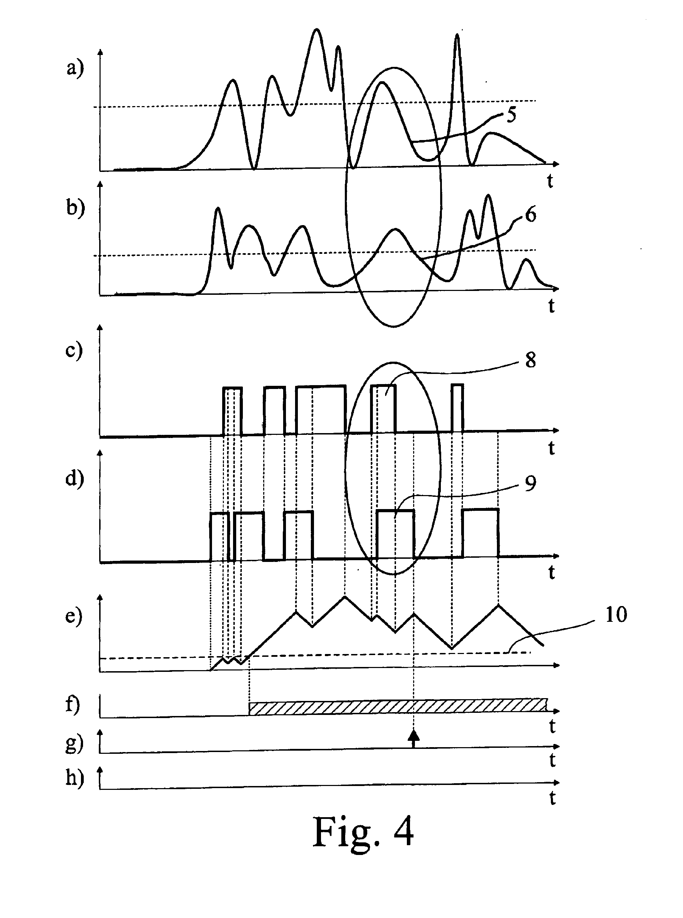

Die Figuren 4a) und 4b) zeigen nun eine Störsituation, die beispielsweise beim Durchlaufen einer Waschstraße auftreten kann. Durch die weitgehend chaotischen Signalverläufe ist es hier so, dass zu einem bestimmten Zeitpunkt auch das für das zu erfassende Bedienereignis charakteristische Verhalten der Sensormesswerte auftritt. Die entsprechenden Bereiche der Signalmeßwerte sind in Fig. a), b) und c), d) jeweils mit einer Umkreisung markiert. In der Bedienereignisüberwachung gilt damit ein Bedienereignis als erkannt, was ohne weitere Maßnahmen zu einer ungewünschten Betätigung führen würde.

Um die obige Fehlerfassung eines Bedienereignisses zu vermeiden, ist es vorschlagsgemäß vorgesehen, dass in einer Störsituationsüberwachung mittels der Sensorsteuerung 4 die Sensormesswerte 5, 6 zumindest eines Sensorelements 2, 3, taktweise, im Hinblick auf das Auftreten eines für eine Störsituation charakteristischen Verhaltens der Sensormesswerte 5, 6 überwacht werden. Auch die Störsituationsüberwachung erfolgt hier fortlaufend, also über einen Überwachungszeitraum gesehen ständig oder jedenfalls in bestimmten Taktintervallen. Ein Vergleich der Fig. 3 und 4 zeigt, dass sich die in Fig. 4 dargestellte Störsituation auf vergleichsweise einfache Weise erkennen lässt.

Wesentlich ist nun, dass mittels der Sensorsteuerung 4 eine Bedienmeldung nur dann erzeugt wird, wenn den beiden Überwachungen nach, also der Bedienereignisüberwachung und der Störsituationsüberwachung nach, ein Bedienereignis und eben keine Störsituation vorliegt. Dem liegt wie oben erläutert die Überlegung zugrunde, dass eine Störsituation ein vermeintliches Bedienereignis ohne weiteres umfassen kann.

Es wurde schon darauf hingewiesen, dass das mindestens eine Sensorelement 2, 3 und die Sensorsteuerung 4 einer Verschlusselementanordnung, hier einer Heckklappenanordnung, eines Kraftfahrzeugs mit einem motorisch verstellbaren Verschlusselement 7 und vorzugsweise mit einer motorisch verstellbaren Klappe 7, insbesondere Heckklappe 7, zugeordnet sind, wobei durch die Bedienmeldung eine motorische Verstellung, hier ein motorisches Öffnen, des Verschlusselements 7, hier der Heckklappe 7, auslösbar ist.

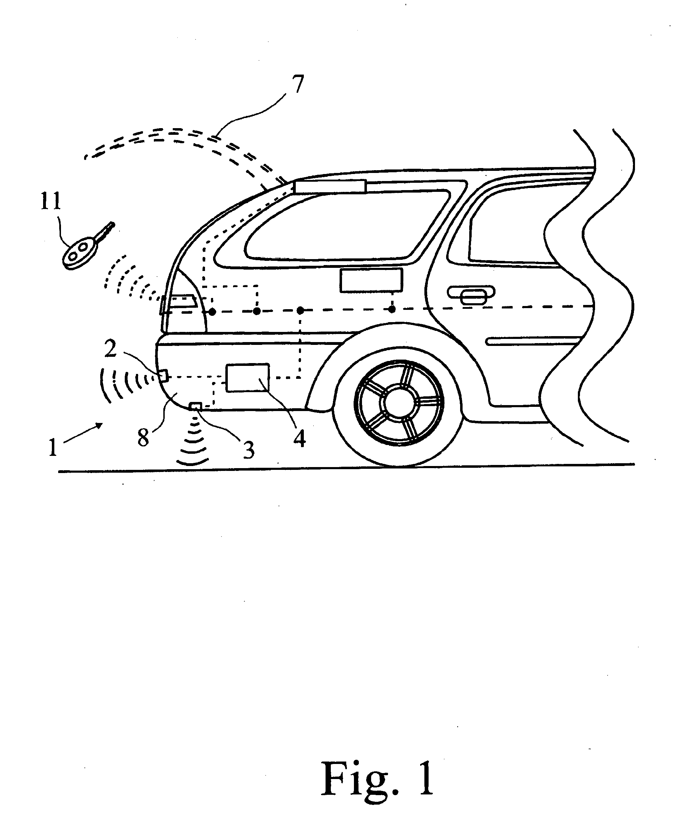

Vorliegend handelt es sich bei dem zu erfassenden Bedienereignis wie schon angesprochen um eine Fußbewegung des Benutzers, wobei die Sensoranordnung 1 mindestens zwei, hier genau zwei, als Näherungssensoren ausgestaltete Sensorelemente 2, 3 aufweist, die, wie in Fig. 1 dargestellt, in oder an einem hinteren Verkleidungsteil 7a, hier und vorzugsweise dem hinteren Stoßfänger 7a, des Kraftfahrzeugs angeordnet sind. Dabei handelt es sich bei den beiden Sensorelementen 2, 3 vorzugsweise um kapazitive Näherungssensoren mit Elektroden, die sich jeweils über einen wesentlichen Teil der Breite des Kraftfahrzeugs erstrecken. Damit ist gewährleistet, dass die Erfassung des Bedienereignisses entsprechend über dem wesentlichen Teil der Breite des Kraftfahrzeugs möglich ist.

Es lässt sich der Darstellung gemäß Fig. 1 entnehmen, dass der schematisch dargestellte Erfassungsbereich des oberen Sensorelements 2 jedenfalls auch nach hinten weist und dass der Erfassungsbereich des unteren Sensorelements 3 jedenfalls auch nach unten weist. Diese Sensoranordnung 1 führt entsprechend zu den in Fig. 3 dargestellten Sensormesswerten 5, 6.

Versuche haben gezeigt, dass ein Bedienereignis wie eine Fußbewegung des Benutzers zwar stets zu dem qualitativ immer gleichen, charakteristischen Verhalten der Sensormesswerte 5, 6 zumindest eines Sensorelements 2, 3 führt, dass je nach Benutzer die resultierenden Sensormesswerte 5, 6 aber im Detail variieren. Entsprechend können hier grundsätzlich bekannte Verfahren der Mustererkennung Anwendung finden.

Als Grundlage für die Mustererkennung werden dem für das zu erfassende Bedienereignis charakteristischen Verhalten der Sensormesswerte 5, 6 zumindest eines Sensorelements 2, 3 eine Reihe von charakteristischen Merkmalen zugeordnet, deren Auftreten im Rahmen der Bedienereignisüberwachung überwacht werden. Im Rahmen der Mustererkennung werden diese Merkmale zunächst aus den Sensormesswerten 5, 6 extrahiert und anschließend klassifiziert.

Dies entspricht der grundlegenden Konzeption bei der Mustererkennung. Dabei werden gegebenenfalls vorgefilterte Messwerte zunächst einer Merkmalsextraktion unterzogen. Die zu extrahierenden Merkmale sind so auszuwählen, dass sie "trennungswirksam" sind. Dies bedeutet, dass die Merkmale geeignet sein müssen, den Zustand" Mit Bedienereignis" von dem Zustand "Ohne Bedienereignis" zu unterscheiden (Christopher M. Bishop, "Pattern Recognition and Machine Learning", Springer, Berlin, 2006, ISBN 0-387-31073-8).

Nach der Merkmalsreduktion wird eine Klassifikation vorgenommen, in der die Ausbildung der extrahierten Merkmale bestimmten Klassen von zu erfassenden Mustern zugeordnet werden.

Aus der Literatur sind eine Reihe sogenannter "Klassifikatoren" bekannt, die sich vorteilhaft auch im vorliegenden Bereich anwenden lassen. Nur beispielhaft seien die Klassifikatoren "Fenster", "Euklidischer Abstand", "Nächster Nachbar", "Kennfeld", "Fuzzy-Logic" und "Neuronale Netze" genannt.

Im Einzelnen handelt es sich hier und vorzugsweise bei dem zu erfassenden Bedienereignis um eine Hin- und Rückbewegung des Fußes des Benutzers, wobei während des Bedienereignisses beide Sensorelemente 2, 3 insbesondere im Wesentlichen gleichzeitig einen impulsartigen zeitlichen Verlauf der Sensormesswerte 5, 6 erzeugen, der im Folgenden als "Sensorimpuls" bezeichnet wird. Als zu extrahierende Merkmale lassen sich die Breite, die Höhe, die Flankensteilheit, die Krümmung von Teilen der Sensorimpulse, der zeitliche Versatz zweier Sensorimpulse eines Sensorelements 2, 3 oder dergleichen definieren. Im Rahmen der Klassifikation werden diese Merkmale dann auf Grenzwerte oder Grenzbereiche hin überprüft.

Weitere denkbare Merkmale sind hier der zeitliche Versatz der Sensorimpulse zweier Sensorelemente 2, 3 oder eine vorbestimmte Korrelation, insbesondere die Kreuzkorrelation der Sensorsignale 5, 6 zweier Sensorelemente 2, 3 zueinander. Auch diese Merkmale lassen sich mit Hilfe von Grenzwerten und Grenzbereichen derart klassifizieren, dass gegebenenfalls zusammen mit den zuvor genannten Merkmalen ein Rückschluss auf das Auftreten oder Nichtauftreten eines Bedienereignisses möglich ist.

Interessant ist vorliegend die Tatsache, dass die Störsituationsüberwachung und die Bedienereignisüberwachung im Wesentlichen gleichzeitig ablaufen. Insbesondere kann es vorgesehen sein, dass beide Überwachungen auf dieselben, gegebenenfalls vorgefilterten, Sensormesswerte 5, 6 zugreifen.

Die Darstellung in Fig. 4 zeigt, dass für die Ermittlung einer Störsituation auch der dem jeweiligen Überwachungszeitpunkt vorgelagerte Bereich relevant ist, so dass in besonders bevorzugter Ausgestaltung in der Störsituationsüberwachung auch ein dem jeweiligen Überwachungszeitpunkt insbesondere unmittelbar vorgelagerter Bereich überwacht wird.

Für die Störsituationsüberwachung sind eine ganze Reihe vorteilhafter Varianten denkbar. Hier ist es so, dass in der Störsituationsüberwachung eine Variable "Störindikator" taktweise erhöht wird, wenn im jeweiligen Überwachungszeitpunkt ein vordefiniertes Störanzeichen erfasst wird, wobei beim Überschreiten eines vorbestimmten Schwellwerts für den Störindikator eine Störsituation in der Sensorsteuerung 4 als erfasst gilt. Man könnte auch sagen, dass die Störanzeichen solange aufaddiert werden, bis der obige Schwellwert überschritten worden ist.

Wenn im jeweiligen Überwachungszeitpunkt kein Störanzeichen erfasst wird, ist es vorzugsweise vorgesehen, dass der Störindikator, insbesondere taktweise, reduziert wird. Letztlich ergibt sich für den Störindikator ein Verhalten, das einer Integration von Werten für die jeweiligen Störanzeichen entspricht.

Für die Definition des Störanzeichens bzw. der Störanzeichen sind eine ganze Reihe von vorteilhaften Varianten denkbar. Vorzugsweise ist es so, dass ein Störanzeichen so definiert ist, dass in dem jeweiligen Überwachungszeitpunkt oder in einem dem jeweiligen Überwachungszeitpunkt zugeordnetem Zeitbereich die Sensormesswerte 5, 6 zumindest eines Sensorelements 2, 3 von dem Nullmesswert verschieden sind, allerdings zumindest einem für das Bedienereignis charakteristischen Merkmal nicht entsprechen. Dies bedeutet, dass zumindest ein Sensorelement 2, 3 irgendetwas in seinem Sensorbereich erfasst, dass aber ein für das Bedienereignis charakteristisches Merkmal fehlt.

Es ist auch denkbar, dass ein Störanzeichen erst dann als erfasst angesehen wird, wenn aus der Gesamtanzahl der für das Bedienereignis charakteristischen Merkmale eine vorbestimmte Mindestanzahl charakteristischer Merkmale fehlt. Dabei kann eine Erhöhung des Störindikators um den Zahlenwert "1" oder um einen Wert, der von der Anzahl der nichterfüllten charakteristischer Merkmale abhängt, vorgesehen sein.

Bei dem in Fig. 3 dargestellten, für das Bedienereignis charakteristischen Verhalten der Sensormesswerte 5, 6 fällt auf, dass im nicht gestörten Fall die Sensormesswerte 5, 6 der Sensorelemente 2, 3 sehr ähnlich zueinander sind. Entsprechend ist es vorteilhafterweise vorgesehen, dass ein Störanzeichen darin besteht, dass in einem dem jeweiligen Überwachungszeitpunkt zugeordneten Bereich der Grad der Ähnlichkeit der Signalverläufe zweier Sensorelemente 2, 3 einen vorbestimmten Schwellwert unterschreitet.

Insbesondere der Grad der obigen Ähnlichkeit der Signalverläufe lässt sich mittels eines Korrelationswertes, insbesondere mittels eines Kreuzkorrelationswertes, definieren. Entsprechend besteht ein Störanzeichen vorzugsweise darin, dass ein Korrelationswert, insbesondere ein Kreuzkorrelationswert, zwischen den Sensormesswerten 5, 6 zweier Sensorelemente 2, 3 einen vorbestimmten Schwellwert unterschreitet.

Es lässt sich der Darstellung in Fig. 3 auch entnehmen, dass bei dem dortigen, für das Bedienereignis charakteristischen Signalverlauf fast durchweg beide Sensorelemente 2, 3 jeweils vom Nullmesswert unterschiedliche Sensormesswerte liefern. Da dies in einer Störsituation in der Regel anders ist, besteht ein Störanzeichen vorzugsweise darin, dass in dem jeweiligen Überwachungszeitpunkt ein Sensorelement 2, 3 als alleiniges Sensorelement 2, 3 vom Nullmesswert verschiedene oder oberhalb eines vorbestimmten Schwellwerts liegende Sensormesswerte 5, 6 liefert (Fig. 4e)).

Im Folgenden wird das vorschlagsgemäße Verfahren anhand des in Fig. 4 dargestellten Signalverlaufs erläutert.

In einem ersten Schritt werden die beiden Sensormesswerte 5, 6 in einem Schwellwertfilter gefiltert, so dass die in den Fig. 4c) und 4d) dargestellten Sensormesswerte entstehen. Die resultierenden Rechteckimpulse werden im Hinblick auf eine ganze Reihe von charakteristischen Merkmalen untersucht, wie weiter oben erläutert. Hierbei liefert die Bedienereignisüberwachung einen Treffer, da die Rechteckimpulse 8 und 9 der beiden Sensorelemente 2, 3 das Vorliegen eines Bedienereignisses implizieren. Das Ergebnis der Bedienereignisüberwachung ist in Fig. 4g) dargestellt.

Allerdings zeigt die Darstellung des Störindikators gemäß Fig. 4e) und die dazugehörige Darstellung des Störindikators nach einer Schwellwertfilterung gemäß Fig. 4f), dass der Störindikator im Bereich des vermeintlichen Bedienereignisses den vorbestimmten Schwellwert 10 überschritten hat, was hier und vorzugsweise bedeutet, dass eine Störsituation vorliegt. Dadurch, dass vorschlagsgemäß mittels der Sensorsteuerung 4 eine Bedienmeldung nur dann erzeugt wird, wenn den beiden Überwachungen nach ein Bedienereignis und keine Störsituation vorliegt, kommt es bei dem in Fig. 4 dargestellten Sensorverlauf nicht zur Erzeugung einer Bedienmeldung, wie Fig. 4h) zeigt.

Im Ergebnis bildet die Störsituationsüberwachung eine Ergänzung zu der Bedienereignisüberwachung, die grundsätzlich auch ohne die Störsituationsüberwachung lauffähig wäre. Mittels der Störsituationsüberwachung wird die Erfassung vermeintlicher (aber nicht tatsächlich vorhandener) Bedienereignisse wirkungsvoll und mit einfachen Mitteln unterdrückt.

Nach einer weiteren Lehre, der ebenfalls eigenständige Bedeutung zukommt, wird eine Verschlusselementanordnung eines Kraftfahrzeugs mit einem motorisch verstellbaren Verschlusselement 7, hier mit einer motorisch verstellbaren Heckklappe 7, beansprucht, wobei zur sensorischen Erzeugung einer Bedienmeldung eine Sensoranordnung 1 mit mindestens einem insbesondere als Näherungssensor ausgestalteten Sensorelement 2, 3 und eine Sensorsteuerung 4 vorgesehen sind. Durch die Bedienmeldung ist eine motorische Verstellung des Verschlusselements 7 auslösbar. Dabei können der motorischen Verstellung des Verschlusselements 7 eine Reihe von Abfragen, insbesondere ein Authentifizierungsdialog mit einem Funkschlüssel 11 vorausgehen. Ein solcher Authentifizierungsdialog ist in Fig. 1 lediglich angedeutet und spielt für die vorschlagsgemäße Lehre keine Rolle.

Die Sensorsteuerung 4 überwacht in einer Bedienereignisüberwachung die Sensormesswerte 5, 6 zumindest eines Sensorelements 2, 3 im Hinblick auf das Auftreten eines für das zu erfassende Bedienereignis charakteristischen Verhaltens der Sensormesswerte 5, 6.

Wesentlich ist nun, dass die Sensorsteuerung 4 in einer Störsituationsüberwachung die Sensormesswerte 5, 6 zumindest eines Sensorelements 2, 3 im Hinblick auf das Auftreten eines für eine Störsituation charakteristischen Verhaltens der Sensormesswerte 5, 6 überwacht und dass die Sensorsteuerung 4 eine Bedienmeldung nur dann erzeugt, wenn den beiden Überwachungen nach ein Bedienereignis und keine Störsituation vorliegt.

Im Hinblick auf die Erläuterung und auf mögliche Varianten der weiteren, vorschlagsgemäßen Lehre darf auf die obigen Erläuterungen zu dem vorschlagsgemäßen Verfahren der ersten Lehre verwiesen werden.

## Patentansprüche

1. Verfahren zur Erzeugung einer Bedienmeldung beim Auftreten eines Bedienereignisses, wobei eine Sensoranordnung (1) mit mindestens einem insbesondere als Näherungssensor ausgestalteten Sensorelement (2, 3) und eine Sensorsteuerung (4) zur Erzeugung der Bedienmeldung beim Vorliegen des Bedienereignisses vorgesehen sind,
wobei in einer Bedienereignisüberwachung mittels der Sensorsteuerung (4) die Sensormesswerte (5, 6) zumindest eines Sensorelements (2, 3), insbesondere taktweise, auf das Auftreten eines für das Bedienereignis charakteristischen Verhaltens der Sensormesswerte (5, 6) überwacht werden,
**dadurch gekennzeichnet,**
**dass** in einer Störsituationsüberwachung mittels der Sensorsteuerung (4) die Sensormesswerte (5, 6) zumindest eines Sensorelements (2, 3) taktweise auf das Auftreten eines für eine Störsituation charakteristischen Verhaltens der Sensormesswerte (5, 6) überwacht werden,
**dass** mittels der Sensorsteuerung (4) eine Bedienmeldung nur dann erzeugt wird, wenn den beiden Überwachungen nach ein Bedienereignis und keine Störsituation vorliegt und
**dass** in der Störsituationsüberwachung eine Variable "Störindikator" taktweise erhöht wird, wenn im jeweiligen Überwachungszeitpunkt ein Störanzeichen erfasst wird und dass beim Überschreiten eines vorbestimmten Schwellwerts für den Störindikator eine Störsituation in der Sensorsteuerung (4) als erfasst gilt.

2. Verfahren nach Anspruch 1, **dadurch gekennzeichnet, dass** das mindestens eine Sensorelement (2, 3) und die Sensorsteuerung (4) einer Verschlusselementanordnung eines Kraftfahrzeugs mit einem motorisch verstellbaren Verschlusselement (7), vorzugsweise einer Klappe (7), weiter vorzugsweise einer Heckklappe (7), zugeordnet sind und dass durch die Bedienmeldung eine motorische Verstellung, insbesondere ein motorisches Öffnen, des Verschlusselements (7) auslösbar ist.

3. Verfahren nach Anspruch 1 oder 2, **dadurch gekennzeichnet, dass** das Bedienereignis als Fußbewegung des Benutzers definiert ist und dass die Sensoranordnung (1) mindestens zwei als Näherungssensoren ausgestaltete Sensorelemente (2, 3) aufweist, die in oder an einem hinteren Verkleidungsteil, insbesondere dem hinteren Stoßfänger, eines Kraftfahrzeugs angeordnet sind und die sich vorzugsweise über einen wesentlichen Teil der Breite des Kraftfahrzeugs erstrecken, dass der Erfassungsbereich eines Sensorelements (2, 3) jedenfalls auch nach hinten weist und dass der Erfassungsbereich des anderen Sensorelements (2, 3) jedenfalls auch nach unten weist.

4. Verfahren nach einem der vorhergehenden Ansprüche, **dadurch gekennzeichnet, dass** dem für das Bedienereignis charakteristischen Verhalten der Sensormesswerte (5, 6) zumindest eines Sensorelements (2, 3) eine Anzahl charakteristischer Merkmale zugeordnet ist, deren Auftreten im Rahmen der Bedienereignisüberwachung überwacht werden.

5. Verfahren nach einem der vorhergehenden Ansprüche, **dadurch gekennzeichnet, dass** als Bedienereignis eine Hin- und Rückbewegung des Fußes des Benutzers definiert ist und dass während des Bedienereignisses beide Sensorelemente (2, 3) insbesondere im Wesentlichen gleichzeitig einen impulsartigen zeitlichen Verlauf der Sensormesswerte (5, 6) - Sensorimpuls - erzeugen.

6. Verfahren nach Anspruch 4 und ggf. nach Anspruch 5, **dadurch gekennzeichnet, dass** ein charakteristisches Merkmal als Breite oder als Höhe oder als Flankensteilheit oder als Krümmung von Teilen der Sensorimpulse oder als zeitlicher Versatz zweier Sensorimpulse eines Sensorelements (2, 3) definiert sind.

7. Verfahren nach Anspruch 4 und ggf. nach Anspruch 5 oder 6, **dadurch gekennzeichnet, dass** ein charakteristisches Merkmal als zeitlicher Versatz der Sensorimpulse zweier Sensorelemente (2, 3) oder als vorbestimmte Korrelation, insbesondere als Kreuzkorrelation, der Sensorsignale (5, 6) zweier Sensorelemente (2, 3) zueinander definiert sind.

8. Verfahren nach einem der vorhergehenden Ansprüche, **dadurch gekennzeichnet, dass** die Störsituationsüberwachung und die Bedienereignisüberwachung im Wesentlichen gleichzeitig ablaufen.

9. Verfahren nach einem der vorhergehenden Ansprüche, **dadurch gekennzeichnet, dass** in der Störsituationsüberwachung jedenfalls auch ein dem jeweiligen Überwachungszeitpunkt insbesondere unmittelbar vorgelagerter Bereich überwacht wird.

10. Verfahren nach einem der vorhergehenden Ansprüche, **dadurch gekennzeichnet, dass** der Störindikator insbesondere taktweise reduziert wird, wenn im Überwachungszeitpunkt kein Störanzeichen erfasst wird.

11. Verfahren nach einem der vorhergehenden Ansprüche, **dadurch gekennzeichnet, dass** ein Störanzeichen darin besteht, dass im Überwachungszeitpunkt oder in einem dem Überwachungszeitpunkt zugeordneten Zeitbereich die Sensormesswerte (5, 6) zumindest eines Sensorelements (2, 3) von einem Nullmesswert verschieden sind und zumindest einem charakteristischen Merkmal nicht entsprechen.

12. Verfahren nach einem der vorhergehenden Ansprüche, **dadurch gekennzeichnet, dass** ein Störanzeichen darin besteht, dass in einem dem jeweiligen Überwachungszeitpunkt zugeordneten Zeitbereich der Grad der Ähnlichkeit der Signalverläufe (5, 6) zweier Sensorelemente (2, 3) einen vorbestimmten Schwellwert unterschreitet.

13. Verfahren nach einem der vorhergehenden Ansprüche, **dadurch gekennzeichnet, dass** ein Störanzeichen darin besteht, dass ein Korrelationswert, insbesondere ein Kreuzkorrelationswert, zwischen den Sensormesswerten (5, 6) zweier Sensorelemente (2, 3) einen vorbestimmten Schwellwert unterschreitet.

14. Verfahren nach einem der vorhergehenden Ansprüche, **dadurch gekennzeichnet, dass** ein Störanzeichen darin besteht, dass in dem jeweiligen Überwachungszeitpunkt ein Sensorelement (2, 3) als alleiniges Sensorelement (2, 3) von einem Nullmesswert verschiedene oder oberhalb eines vorbestimmten Schwellwerts liegende Sensormesswerte (5, 6) liefert.

15. Verschlußelementanordnung eines Kraftfahrzeugs mit einem motorisch verstellbaren Verschlusselement (7), wobei zur Erzeugung einer Bedienmeldung beim Auftreten eines Bedienereignisses eine Sensoranordnung (1) mit mindestens einem insbesondere als Näherungssensor ausgestalteten Sensorelement (2, 3) und eine Sensorsteuerung (4) vorgesehen sind, wobei durch die Bedienmeldung eine motorische Verstellung des Verschlusselements (7) auslösbar ist,
wobei die Sensorsteuerung (4) in einer Bedienereignisüberwachung die Sensormesswerte (5, 6) zumindest eines Sensorelements (2, 3), insbesondere taktweise, auf das Auftreten eines für das zu erfassende Bedienereignis charakteristischen Verhaltens der Sensormesswerte (5, 6) überwacht,
insbesondere zur Durchführung eines Verfahrens nach einem der vorhergehenden Ansprüche,
**dadurch gekennzeichnet,**
**dass** die Sensorsteuerung (4) in einer Störsituationsüberwachung die Sensormesswerte (5, 6) zumindest eines Sensorelements (2, 3) taktweise, auf das Auftreten eines für eine Störsituation charakteristischen Verhaltens der Sensormesswerte (5, 6) überwacht,
**dass** die Sensorsteuerung (4) eine Bedienmeldung nur dann erzeugt, wenn den beiden Überwachungen nach ein Bedienereignis und keine Störsituation vorliegt und
**dass** die Sensorsteuerung (4) in der Störsituationsüberwachung eine Variable "Störindikator" taktweise erhöht, wenn im jeweiligen Überwachungszeitpunkt ein Störanzeichen erfasst wird und dass beim Überschreiten eines vorbestimmten Schwellwerts für den Störindikator eine Störsituation in der Sensorsteuerung (4) als erfasst gilt.

## Claims

1. Method for generating an operator control message when an operator control event occurs, a sensor arrangement (1) having at least one sensor element (2, 3) in the form of a proximity sensor, in particular, and a sensor controller (4) for generating the operator control message when the operator control event is present being provided,
the sensor controller (4) being used, in operator control event monitoring, to monitor the sensor measured values (5, 6) of at least one sensor element (2, 3) cyclically for the occurrence of a behaviour of the sensor measured values (5, 6) which is characteristic of the operator control event,
**characterized**
**in that** the sensor controller (4) is used, in disruptive situation monitoring, to monitor the sensor measured values (5, 6) of at least one sensor element (2, 3) cyclically for the occurrence of a behaviour of the sensor measured values (5, 6) which is characteristic of a disruptive situation,
**in that** the sensor controller (4) is used to generate an operator control message only when an operator control event, and not a disruptive situation, is present according to the two monitoring operation, and in that a "disruptive indicator" variable is increased cyclically in the disruptive situation monitoring when a disruptive sign is detected at the respective monitoring time, and in that a disruptive situation is deemed to be detected in the sensor controller (4) when a predetermined threshold value for the disruptive indicator is exceeded.

2. Method according to Claim 1, **characterized in that** the at least one sensor element (2, 3) and the sensor controller (4) are associated with a closure element arrangement of a motor vehicle having a motor-adjustable closure element (7), preferably a gate (7), further preferably a tailgate (7), and **in that** motorized adjustment, in particular motorized opening, of the closure element (7) can be triggered by the operator control message.

3. Method according to Claim 1 or 2, **characterized in that** the operator control event is defined as a foot movement of the user, and **in that** the sensor arrangement (1) has at least two sensor elements (2, 3) which are in the form of proximity sensors, are arranged in or on a rear paneling part, in particular the rear bumper, of a motor vehicle and preferably extend over a substantial part of the width of the motor vehicle, **in that** the detection range of one sensor element (2, 3) also points to the rear in any case, and **in that** the detection range of the other sensor element (2, 3) also points downward in any case.

4. Method according to one of the preceding claims, **characterized in that** a number of characteristic features, the occurrence of which is monitored during the operator control event monitoring, are associated with the behaviour of the sensor measured values (5, 6) of at least one sensor element (2, 3) which is characteristic of the operator control event.

5. Method according to one of the preceding claims, **characterized in that** a to and fro movement of the user's foot is defined as the operator control event, and **in that** both sensor elements (2, 3), in particular, generate a pulsed temporal profile of the sensor measured values (5, 6) - sensor pulse - at substantially the same time during the operator control event.

6. Method according to Claim 4 and possibly according to Claim 5, **characterized in that** a characteristic feature is defined as the width or height or edge steepness or curvature of parts of the sensor pulses or as a temporal offset between two sensor pulses of a sensor element (2, 3).

7. Method according to Claim 4 and possibly according to Claim 5 or 6, **characterized in that** a characteristic feature is defined as a temporal offset between the sensor pulses of two sensor elements (2, 3) or as a predetermined correlation, in particular a cross-correlation, of the sensor signals (5, 6) of two sensor elements (2, 3) relative to one another.

8. Method according to one of the preceding claims, **characterized in that** the disruptive situation monitoring and the operator control event monitoring take place at substantially the same time.

9. Method according to one of the preceding claims, **characterized in that** an area immediately before the respective monitoring time, in particular, is also monitored in any case in the disruptive situation monitoring.

10. Method according to one of the preceding claims, **characterized in that** the disruptive indicator is reduced, in particular cyclically, if a disruptive sign is not detected at the monitoring time.

11. Method according to one of the preceding claims, **characterised in that** a disruptive sign involves the sensor measured values (5, 6) of at least one sensor element (2, 3) being different from a zero measured value and not corresponding to at least one characteristic feature at the monitoring time or in a time range associated with the monitoring time.

12. Method according to one of the preceding claims, **characterized in that** a disruptive sign involves the degree of similarity of the signal profiles (5, 6) of two sensor elements (2, 3) undershooting a predetermined threshold value in a time range associated with the respective monitoring time.

13. Method according to one of the preceding claims, **characterized in that** a disruptive sign involves a correlation value, in particular a cross-correlation value, between the sensor measured values (5, 6) of two sensor elements (2, 3) undershooting a predetermined threshold value.

14. Method according to one of the preceding claims, **characterized in that** a disruptive sign involves a sensor element (2, 3), as the sole sensor element (2, 3), providing sensor measured values (5, 6) which are different from a zero measured value or are above a predetermined threshold value at the respective monitoring time.

15. Closure element arrangement of a motor vehicle having a motor-adjustable closure element (7), a sensor arrangement (1) having at least one sensor element (2, 3) in the form of a proximity sensor, in particular, and a sensor controller (4) being provided for the purpose of generating an operator control message when an operator control event occurs, motorized adjustment of the closure element (7) being able to be triggered by the operator control message,
the sensor controller (4), in operator control event monitoring, monitoring the sensor measured values (5, 6) of at least one sensor element (2, 3), in particular cyclically, for the occurrence of a behaviour of the sensor measured values (5, 6) which is characteristic of the operator control event to be detected,
in particular for carrying out a method according to one of the preceding claims,
**characterized**
**in that** the sensor controller (4), in disruptive situation monitoring, monitors the sensor measured values (5, 6) of at least one sensor element (2, 3) cyclically for the occurrence of a behaviour of the sensor measured values (5, 6) which is characteristic of a disruptive situation,
**in that** the sensor controller (4) generates an operator control message only when an operator control event, and not a disruptive situation, is present according to the two monitoring operations, and
**in that** the sensor controller (4), in the disruptive situation monitoring, increases a "disruptive indicator" variable cyclically when a disruptive sign is detected at the respective monitoring time, and in that a disruptive situation is deemed to be detected in the sensor controller (4) when a predetermined threshold value for the disruptive indicator is exceeded.

## Revendications

1. Procédé pour générer un message de service lors de l'apparition d'un évènement de service, dans lequel un agencement de capteurs (1) avec au moins un élément de capteur (2, 3) en particulier réalisé en tant que capteur de proximité et une commande de capteurs (4) pour la génération du message de service lorsque l'évènement de service a lieu, sont prévus,
dans lequel, lors d'une surveillance d'évènements de service au moyen de la commande de capteurs (4), on surveille les valeurs de mesure de capteur (5, 6) d'au moins un élément de capteur (2, 3), en particulier par intermittence, quant à l'apparition d'un comportement caractéristique pour l'évènement de service des valeurs de mesure de capteur (5, 6),
**caractérisé en ce que**,
lors d'une surveillance de situations de perturbation au moyen de la commande de capteurs (4), on surveille par intermittence les valeurs de mesure de capteur (5, 6) d'au moins un élément de capteur (2, 3) quant à l'apparition d'un comportement caractéristique pour une situation de perturbation des valeurs de mesure de capteur (5, 6),
**en ce que**, au moyen de la commande de capteurs (4), un message de service est généré seulement si, d'après les deux surveillances, il y a un évènement de service et pas de situation de perturbation, et
**en ce que**, lors de la surveillance de situations de perturbation, une variable «d'indicateur de perturbation » est augmentée par intermittence lorsqu'un signe de perturbation est détecté au moment de surveillance respectif, et **en ce qu'**en cas de dépassement par le haut d'une valeur de seuil prédéterminée pour l'indicateur de perturbation, une situation de perturbation est réputée être détectée dans la commande de capteurs (4).

2. Procédé selon la revendication 1, **caractérisé en ce que** l'au moins un élément de capteur (2, 3) et la commande de capteurs (4) sont associés à un agencement d'élément de fermeture d'un véhicule automobile avec un élément de fermeture (7) déplaçable de manière motorisée, de préférence un abattant (7), de préférence encore un hayon (7), et **en ce que** grâce au message de service, il est possible de déclencher un déplacement motorisé, en particulier une couverture motorisée, de élément de fermeture (7).

3. Procédé selon la revendication 1 ou 2, **caractérisé en ce que** l'évènement de service est défini en tant que mouvement de pied de l'utilisateur et **en ce que** l'agencement de capteurs (1) présente au moins deux éléments de capteur (2, 3) réalisés en tant que capteurs de proximité, lesquels sont disposés dans ou sur un élément d'habillage arrière, en particulier le pare-chocs arrière, d'un véhicule automobile, et lesquels s'étendent de préférence sur une partie essentielle de la largeur du véhicule automobile, **en ce que** la zone de détection d'un élément de capteur (2, 3) est dans tous les cas également orientée vers l'arrière, et **en ce que** la zone de détection de l'autre élément de capteur (2, 3) est dans tous les cas également orientée vers le bas.

4. Procédé selon l'une des revendications précédentes, **caractérisé en ce que** l'on associe au comportement caractéristique pour l'événement de service des valeurs de mesure de capteur (5, 6) d'au moins un élément de capteur (2, 3) un certain nombre de caractéristiques distinctives dont les apparitions sont surveillées dans le cadre de la surveillance d'évènements de service.

5. Procédé selon l'une des revendications précédentes, **caractérisé en ce qu'**un mouvement d'aller et retour du pied de l'utilisateur est défini en tant qu'évènement de service et **en ce que**, pendant l'évènement de service, les deux éléments de capteur (2, 3) génèrent, en particulier sensiblement simultanément, une variation dans le temps à caractère impulsionnel des valeurs de mesure de capteur (5, 6) ou impulsion de détection.

6. Procédé selon la revendication 4 et selon la revendication 5 le cas échéant, **caractérisé en ce qu'**une caractéristique distinctive est définie en tant que largeur ou en tant que hauteur ou en tant que raideur de flanc ou en tant que courbure de parties des impulsions de détection, ou en tant que décalage temporel de deux impulsions de détection d'un élément de capteur (2, 3).

7. Procédé selon la revendication 4 et selon la revendication 5 ou 6 le cas échéant, **caractérisé en ce qu'**une caractéristique distinctive est définie en tant que décalage temporel des impulsions de détection de deux éléments de capteur (2, 3) ou en tant que corrélation prédéterminée, en particulier en tant que corrélation croisée, des signaux de détection (5, 6) de deux éléments de capteur (2, 3) l'un par rapport à l'autre.

8. Procédé selon l'une des revendications précédentes, **caractérisé en ce que** la surveillance des situations de perturbation et la surveillance des évènements de service se déroulent sensiblement en même temps.

9. Procédé selon l'une des revendications précédentes, **caractérisé en ce que**, lors de la surveillance des situations de perturbation, on surveille dans tous les cas également une plage précédant en particulier immédiatement le moment de surveillance respectif.

10. Procédé selon l'une des revendications précédentes, **caractérisé en ce que** l'indicateur de perturbation est réduit, en particulier par intermittence, si aucun signe de perturbation n'est détecté au moment de la surveillance.

11. Procédé selon l'une des revendications précédentes, **caractérisé en ce qu'**un signe de perturbation consiste **en ce que**, au moment de la surveillance ou dans une plage de temps associée au moment de la surveillance, les valeurs de mesure de capteur (5, 6) d'au moins un élément de capteur (2, 3) sont différentes d'une valeur de mesure nulle et ne correspondent pas à au moins une caractéristique distinctive.

12. Procédé selon l'une des revendications précédentes, **caractérisé en ce qu'**un signe de perturbation consiste **en ce que**, dans une plage de temps associée au moment de surveillance respectif, le degré de similitude des variations de signal (5, 6) de deux éléments de capteur (2, 3) dépasse par le bas une valeur de seuil prédéterminée.

13. Procédé selon l'une des revendications précédentes, **caractérisé en ce qu'**un signe de perturbation consiste **en ce qu'**une valeur de corrélation, en particulier une valeur de corrélation croisée, entre les valeurs de mesure de capteur (5, 6) de deux éléments de capteur (2, 3), dépasse par le bas une valeur de seuil prédéterminée.

14. Procédé selon l'une des revendications précédentes, **caractérisé en ce qu'**un signe de perturbation consiste **en ce que**, au moment de surveillance respectif, un élément de capteur (2, 3) en tant qu'élément de capteur (2, 3) unique délivre des valeurs de mesure de capteur (5, 6) différentes d'une valeur de mesure nulle ou se situant au-dessus d'une valeur de seuil prédéterminée.

15. Agencement d'élément de fermeture d'un véhicule automobile avec un élément de fermeture (7) déplaçable de manière motorisée, dans lequel, pour la génération d'un message de service lors de l'apparition d'un évènement de service, on prévoit un agencement de capteurs (1) avec au moins un élément de capteur (2, 3) en particulier réalisé en tant que capteur de proximité et une commande de capteurs (4), dans lequel un déplacement motorisé de l'élément de fermeture (7) peut être déclenché par le message de service, dans lequel la commande de capteurs (4) surveille, lors d'une surveillance d'évènements de service, les valeurs de mesure de capteur (5, 6) d'au moins un élément de capteur (2, 3), en particulier par intermittence, quant à l'apparition d'un comportement caractéristique pour l'évènement de service à détecter des valeurs de mesure de capteur (5, 6),
en particulier pour la mise en oeuvre d'un procédé selon l'une des revendications précédentes,
**caractérisé en ce que**,
lors d'une surveillance de situations de perturbation, la commande de capteurs (4) surveille par intermittence les valeurs de mesure de capteur (5, 6) d'au moins un élément de capteur (2, 3) quant à l'apparition d'un comportement caractéristique pour une situation de perturbation des valeurs de mesure de capteur (5, 6),
**en ce que** la commande de capteurs (4) génère un message de service seulement si, d'après les deux surveillances, il y a un évènement de service et pas de situation de perturbation, et
**en ce que**, lors de la surveillance de situations de perturbation, la commande de capteurs (4) augmente par intermittence une variable « d'indicateur de perturbation » lorsqu'au moment de surveillance respectif, un signe de perturbation est détecté, et **en ce qu'**en cas de dépassement par le haut d'une valeur de seuil prédéterminée pour l'indicateur de perturbation, une situation de perturbation est réputée être détectée dans la commande de capteurs (4).
